(19) Europäisches Patentamt / European Patent Office / Office européen des brevets

(11) **EP 4 312 287 A1**

(12) **EUROPEAN PATENT APPLICATION**

(43) Date of publication:
**31.01.2024   Bulletin 2024/05**

(21) Application number: **23184116.4**

(22) Date of filing: **07.07.2023**

(51) International Patent Classification (IPC):
**H01M 4/134** (2010.01)     **H01M 4/1395** (2010.01)
**H01M 4/38** (2006.01)       H01M 4/02 (2006.01)

(52) Cooperative Patent Classification (CPC):
**H01M 4/386; H01M 4/134; H01M 4/1395;**
H01M 2004/021; H01M 2004/027

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **28.07.2022   JP 2022120819**

(71) Applicant: **TOYOTA JIDOSHA KABUSHIKI KAISHA**
**Toyota-shi, Aichi-ken, 471 8571 (JP)**

(72) Inventors:
• **UCHIYAMA, Takayuki**
  **Toyota-shi, 471-8571 (JP)**
• **YOSHIDA, Jun**
  **Toyota-shi, 471-8571 (JP)**

(74) Representative: **J A Kemp LLP**
**80 Turnmill Street**
**London EC1M 5QU (GB)**

(54) **ACTIVE MATERIAL COMPOSITE PARTICLE, SECONDARY BATTERY, AND MANUFACTURING METHOD FOR ACTIVE MATERIAL COMPOSITE PARTICLE**

(57)    Disclosed is an active material composite particle comprising Si and having excellent cycle characteristics under low constraint. The active material composite particle of the present disclosure comprises Si and a resin, wherein an area ratio of the resin in a surface layer portion of the composite particle is higher than an area ratio of the resin in a center portion of the composite particle when a cross-section of the composite particle is observed.

FIG. 1A

1

1x        1y        1x

EP 4 312 287 A1

**Description**

FIELD

The present application discloses an active material composite particle, a secondary battery, and a manufacturing method for an active material composite particle.

BACKGROUND

PTL 1 discloses a negative electrode active material having a small amount of expansion due to charging, wherein the negative electrode active material is composed of a nonwoven fabric-like particle containing Si fibers, has a predetermined average particle diameter (D50), and is amorphous. PTL 2 discloses a negative electrode active material having a small initial irreversible capacity, wherein the negative electrode active material comprises secondary particles of Si-based particles each having formed thereon a fluorinated layer.

[CITATION LIST]

[PATENT LITERATURE]

[PTL 1] Japanese Unexamined Patent Publication No. 2021-022554
[PTL 2] Japanese Unexamined Patent Publication No. 2021-057216

SUMMARY

[TECHNICAL PROBLEM]

Conventional active materials comprising Si can be improved in terms of, for example, cycle characteristics under low constraint.

[SOLUTION TO PROBLEM]

The present application discloses the following aspects as means for solution to the above problem.

<Aspect 1>

An active material composite particle, comprising Si and a resin, wherein
an area ratio of the resin in a surface layer portion of the composite particle is higher than an area ratio of the resin in a center portion of the composite particle when a cross-section of the composite particle is observed.

<Aspect 2>

The active material composite particle according to Aspect 1, wherein
a porosity in the center portion of the composite particle is higher than a porosity in the surface layer portion of the composite particle when a cross-section of the composite particle is observed.

<Aspect 3>

The active material composite particle according to Aspect 1 or 2, wherein
an area ratio of Si in the center portion of the composite particle is higher than an area ratio of Si in the surface layer portion of the composite particle when a cross-section of the composite particle is observed.

<Aspect 4>

The active material composite particle according to any of Aspects 1 to 3, wherein
the surface layer portion is composed of the resin.

<Aspect 5>

The active material composite particle according to any of Aspects 1 to 4, wherein the center portion comprises a plurality of Si particles.

<Aspect 6>

The active material composite particle according to Aspect 5, wherein the Si particles are porous.

<Aspect 7>

The active material composite particle according to Aspect 5 or 6, wherein the composite particle comprises the surface layer portion comprising the resin and the center portion comprising a plurality of the Si particles and voids.

<Aspect 8>

A secondary battery, comprising a positive electrode, an electrolyte layer, and a negative electrode, wherein the negative electrode comprises the active material composite particle according to any of Aspects 1 to 7.

<Aspect 9>

The secondary battery according to Aspect 8, wherein at least one of the positive electrode, the electrolyte layer, and the negative electrode comprises a solid electrolyte.

<Aspect 10>

A manufacturing method for an active material composite particle, the method comprising:

dropletizing a slurry comprising Si particles, a resin, and a solvent to obtain slurry droplets; and
flash-drying the slurry droplets in a heating gas to obtain an active material composite comprising the Si particles and the resin.

<Aspect 11>

The manufacturing method according to Aspect 10, wherein the dropletizing of the slurry and the flash-drying of the slurry droplets are carried out by spray drying.

[EFFECTS]

The active material composite particle of the present disclosure has excellent cycle characteristics under low constraint.

BRIEF DESCRIPTION OF DRAWINGS

FIG. 1A schematically shows an example of a cross-section of the active material composite particle.
FIG. 1B is a schematic drawing for explaining a "surface layer portion" and a "center portion" in a cross-section of the active material composite particle.
FIG. 2 schematically shows an example of a configuration of a secondary battery.
FIG. 3 shows an example of the flow of a manufacturing method for the active material composite particle.
FIG. 4A is a SEM image showing an example of a cross-sectional structure before pressing for the active material composite particle according to the Example.
FIG. 4B shows the result after analyzing the image according to FIG. 4A.
FIG. 5A is a SEM image showing an example of a cross-sectional structure after pressing for the active material composite particle according to the Example.

FIG. 5B shows the result after analyzing the image according to FIG. 5A.
FIG. 6 is the result of comparing cycle characteristics of the Example and Comparative Example under constraint.

DESCRIPTION OF EMBODIMENTS

1. Active material composite particle

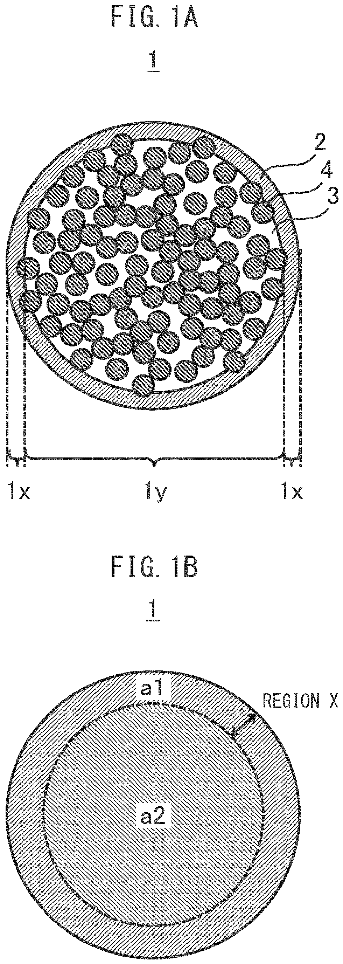

FIG. 1A schematically shows a cross-sectional structure of an active material composite particle 1 according to one embodiment. The active material composite particle 1 comprises Si and a resin. When a cross-section of the composite particle 1 is observed, the area ratio of the resin in a surface layer portion 1x of the composite particle 1 is higher than the area ratio of the resin in a center portion 1y of the composite particle 1.

1.1 Surface layer portion and center portion

In the present application, the "surface layer portion" and "center portion" of the active material composite particle are defined as follows. Specifically, when a cross-section of the active material composite particle 1 is observed, if a boundary is observed between the resin-rich outermost layer and a layer on the inside thereof, the outermost layer on the outside of the boundary is regarded as the surface layer portion 1x, and the inner layer on the inside of the boundary as the center portion 1y. When a cross-section of the active material composite particle 1 is observed, and if no boundary is observed between the surface layer portion 1x and the center portion 1y on the inside thereof, the surface layer portion 1x and the center portion 1y are distinguished as follows. Specifically, the surface layer portion 1x of the active material composite particle 1 is specified as follows. As shown in FIG. 1B, a cross-section of the active material composite particle is observed with a scanning electron microscope (SEM) or a transmission electron microscope (TEM) and a two-dimensional image of the cross-section of the active material composite particle is acquired. When the area of a region X from the surface of the active material composite particle to a predetermined depth in the two-dimensional image is designated as "a1" and the area of the entire particle as "a1 + a2", the region X where a1/(a1 + a2) is 0.5 is regarded as the "surface layer portion of the active material composite particle". A portion deeper than the "surface layer portion of the active material composite particle" (portion on the inside) specified in this manner can be the "center portion of the active material composite particle".

1.1.1 Area ratio of resin

For the active material composite particle 1, when a cross-section of the composite particle 1 is observed, the area ratio of the resin in the surface layer portion 1x of the composite particle 1 is higher than the area ratio of the resin in the center portion 1y of the composite particle 1. For example, the active material composite particle 1 may comprise a resin-rich portion in the surface layer portion 1x, or the surface layer portion 1x may consist of a resin, i.e., the surface layer portion 1x may be a resin layer 2. Since the ratio of resin in the surface layer portion 1x of the composite particle 1 is high, even when Si expands due to charging, the volume change of the composite particle 1 as a whole is moderated by the resin in the surface layer portion 1x, and the shape of the composite particle 1 as a whole is easily maintained. In addition, since the ratio of resin in the surface layer portion 1x is high, even when Si expands due to charging, the resin in the surface layer portion 1x functions as a cushioning material, and cracks and gaps in the material surrounding the composite particle 1 are less likely to occur. Thus, excellent cycle characteristics are easily demonstrated under both a high constraint pressure and low constraint.

The ratio $AR_1/AR_2$ of the area ratio $AR_1$ of resin in the surface layer portion 1x of the active material composite particle 1 to the area ratio $AR_2$ of resin in the center portion 1y of the composite particle 1 is not particularly limited. For example, the ratio $AR_1/AR_2$ may be greater than 1.0, 1.5 or greater, 2.0 or greater, 2.5 or greater, 3.0 or greater, 3.5 or greater, 4.0 or greater, 4.5 or greater, or 5.0 or greater. The upper limit of the ratio $AR_1/AR_2$ is not particularly limited, and $AR_2$ can be 0%. The value of the area ratio $AR_1$ in the surface layer portion 1x of the composite particle 1 is not particularly limited. For example, when a cross-section of the composite particle 1 is observed and the area of the entire surface layer portion 1x is set to 100% by area, the area ratio $AR_1$ of resin contained in the surface layer portion 1x may be 70% by area or greater and 100% by area or less, 80% by area or greater and 100% by area or less, or 90% by area or greater and 100% by area or less. Further, the area ratio $AR_2$ of resin in the center portion 1y of the composite particle 1 is not particularly limited. For example, when a cross-section of the composite particle 1 is observed and the area of the entire center portion 1y is set to 100% by area, the area ratio $AR_2$ of resin contained in the center portion 1y may be 0% by area or greater and 30% by area or less, 0% by area or greater and 20% by area or less, or 0% by area or greater and 10% by area or less.

The area ratio $AR_1$ of resin in the surface layer portion 1x of the active material composite particle 1 and the area ratio $AR_2$ of resin in the center portion 1y of the composite particle 1 can be determined by carrying out an elemental analysis of a cross-section of the composite particle 1 by EDX and identifying the region where the resin is present in the cross-section.

1.1.2 Porosity

For the active material composite particle 1, when a cross-section of the composite particle 1 is observed, the porosity in the center portion 1y of the composite particle 1 may be higher than the porosity in the surface layer portion 1x of the composite particle 1. The active material composite particle 1 may have voids (gaps, pores) 3 in the center portion 1y. The active material composite particle 1 may or may not have voids 3 in the surface layer portion 1x. Since the porosity in the center portion 1y is higher than that in the surface layer portion 1x, even when Si expands due to charging, the expanded Si portion can be absorbed by the voids, the volume change of the composite particle 1 as a whole is moderated, and the shape of the composite particle 1 as a whole is easily maintained. In addition, since the volume change of the composite particle 1 as a whole is moderated, cracks and gaps in the material surrounding the composite particle 1 are less likely to occur. Thus, more excellent cycle characteristics are easily demonstrated under both a high constraint pressure and low constraint.

The ratio $P_1/P_2$ of the porosity $P_1$ in the surface layer portion 1x of the active material composite particle 1 to the porosity $P_2$ in the center portion 1y of the composite particle 1 is not particularly limited. For example, the ratio $P_1/P_2$ may be less than 1.0, 0.9 or less, 0.8 or less, 0.7 or less, 0.6 or less, 0.5 or less, 0.4 or less, 0.3 or less, 0.2 or less, or 0.1 or less. The lower limit of the ratio $P_1/P_2$ is not particularly limited, and can be 0 ($P_1 = 0\%$). The value of the porosity $P_1$ in the surface layer portion 1x of the composite particle 1 is not particularly limited. For example, when a cross-section of the composite particle 1 is observed and the area of the entire surface layer portion 1x is set to 100% by area, the area ratio $P_1$ of voids contained in the surface layer portion 1x may be 0% by area or greater and 10% by area or less, 0% by area or greater and 7% by area or less, 0% by area or greater and 5% by area or less, 0% by area or greater and 3% by area or less, or 0% by area or greater and 1% by area or less. Further, the porosity $P_2$ in the center portion 1y of the composite particle 1 is not particularly limited. For example, when a cross-section of the composite particle 1 is observed and the area of the entire center portion 1y is set to 100% by area, the area ratio $P_2$ of voids contained in the center portion 1y may be greater than 0% by area and 50% by area or less, 10% by area or greater and 50% by area or less, or 20% by area or greater and 50% by area or less.

The porosity $P_1$ in the surface layer portion 1x of the active material composite particle 1 and the porosity $P_2$ in the center portion 1y of the composite particle 1 can be determined by carrying out an elemental analysis of a cross-section of the composite particle 1 by EDX and identifying the region where the voids are present in the cross-section.

1.1.3 Area ratio of Si

For the active material composite particle 1, when a cross-section of the composite particle 1 is observed, the area ratio of Si in the center portion 1y of the composite particle 1 may be higher than the area ratio of Si in the surface layer portion 1x of the composite particle 1. Specifically, the active material composite particle 1 may comprise a Si-rich portion in the center portion 1y. Further, the center portion 1y may comprise a plurality of Si particles 4. Since the area ratio of Si in the center portion 1y is higher than that in the surface layer portion 1x, even when Si expands due to charging, expansion of the Si does not easily reach the outer portion of the composite particle 1, the volume change of the composite particle 1 as a whole is moderated, and the shape of the composite particle 1 as a whole is easily maintained. In addition, since the volume change of the composite particle 1 as a whole is moderated, cracks and gaps in the material surrounding the composite particle 1 are less likely to occur. Thus, more excellent cycle characteristics are easily demonstrated under both a high constraint pressure and low constraint.

The ratio $AR_3/AR_4$ of the area ratio $AR_3$ of Si in the surface layer portion 1x of the active material composite particle 1 to the area ratio $AR_4$ of Si in the center portion 1y of the composite particle 1 is not particularly limited. For example, the ratio $AR_3/AR_4$ may be less than 1.0, 0.9 or less, 0.8 or less, 0.7 or less, 0.6 or less, 0.5 or less, 0.4 or less, 0.3 or less, 0.2 or less, or 0.1 or less. The lower limit of the ratio $AR_3/AR_4$ is not particularly limited, and can be 0 ($AR_3 = 0\%$). In addition, the value of the area ratio $AR_3$ of Si in the surface layer portion 1x of the composite portion 1 is not particularly limited. For example, when a cross-section of the composite particle 1 is observed and the area of the entire surface layer portion 1x is set to 100% by area, the area ratio $AR_3$ of Si contained in the surface layer portion 1x may be 0% by area or greater and 30% by area or less, 0% by area or greater and 20% by area or less, or 0% by area or greater and 10% by area or less. Further, the area ratio $AR_4$ of Si in the center portion 1y of the composite particle 1 is not particularly limited. For example, when a cross-section of the composite particle 1 is observed and the area of the entire center portion 1y is set to 100% by area, the area ratio $AR_4$ of Si contained in the center portion 1y may be 50% by area or greater and less than 100% by area, 50% by area or greater and 90% by area or less, or 50% by area or greater and 80% by area or less.

The area ratio $AR_3$ of Si in the surface layer portion 1x of the active material composite particle 1 and the area

ratio $AR_4$ of Si in the center portion 1y of the composite particle 1 can be determined by carrying out an elemental analysis of a cross-section of the composite particle 1 by EDX and identifying the region where Si is present in the cross-section.

1.2 Si

The active material composite particle 1 comprises Si. As shown in FIG. 1A, in the active material composite particle 1, Si may be contained, for example, as particles. The Si particles may be primary particles or secondary particles. The composition of the Si particles is not particularly limited. The ratio of Si element to all elements contained in the Si particles may be, for example, 50 mol% or greater, 70 mol% or greater, or 90 mol% or greater. The Si particles, other than Si element, may comprise additional elements such as Li element. Examples of the additional element other than Li element include Sn element, Fe element, Co element, Ni element, Ti element, Cr element, B element, and P element. Further, the Si particles may comprise impurities such as an oxide. The Si particles may be amorphous or crystalline. The crystal phase contained in the Si particles is not particularly limited.

When Si contained in the active material composite particle 1 is particulate, the number of Si particles contained in one active material composite particle 1 is not particularly limited. The number of Si particles may be 2 or greater, 5 or greater, 10 or greater, 50 or greater, or 100 or greater, and may be 10000 or less, 1000 or less, or 500 or less.

When Si contained in the active material composite particle 1 is particulate, the size thereof is not particularly limited. The average primary particle diameter of the Si particles may be, for example, 10 nm or more, 30 nm or more, 50 nm or more, 100 nm or more, or 150 nm or more, and may be 10 $\mu$m or less, 5 $\mu$m or less, 3 $\mu$m or less, 2 $\mu$m or less, or 1 $\mu$m or less. The average secondary particle diameter of the Si particles may be, for example, 100 nm or more, 1 $\mu$m or more, or 2 $\mu$m or more, and may be 20 $\mu$m or less, 15 $\mu$m or less, or 10 $\mu$m or less. The average primary particle diameter and the average secondary particle diameter can be determined by observation with an electron microscope such as SEM, and can be determined, for example, as average values of maximum Feret diameters of a plurality of particles. A large number of samples is preferable, for example, 20 or more, and may be 50 or more or 100 or more. The average primary particle diameter and the average secondary particle diameter can be appropriately adjusted by, for example, appropriately changing the manufacturing conditions of the Si particles or by carrying out a classification treatment.

When Si contained in the active material composite particle 1 is particulate, the Si particles may be porous. For example, when the center portion 1y comprises a plurality of Si particles, by making the Si particles porous, the amount of Si expansion during charging can be decreased. The state of voids (gaps, pores) in the porous Si particles is not particularly limited. The porous Si particles may be particles comprising nanoporous silicon. Nanoporous silicon refers to silicon in which a plurality of pores having a pore size in the order of nanometers (less than 1000 nm, preferably 100 nm or less) are present. The porous Si particles may comprise pores having a diameter of 55 nm or less. Pores having a diameter of 55 nm or less are not easily crushed even by pressing. In other words, porous Si particles comprising pores having a diameter of 55 nm or less easily maintain a porous quality even after pressing. For example, pores having a diameter of 55 nm or less per 1g of porous Si particles may be contained in 0.21 cc/g or more, 0.22 cc/g or more, or 0.23 cc/g or more, and may be contained in 0.30 cc/g or less, 0.28 cc/g or less, or 0.26 cc/g or less. The volume of pores having a diameter of 55 nm or less contained in the porous Si particles can be determined from a pore size distribution by, for example, a nitrogen gas adsorption method or DFT method.

When porous Si particles are contained in the active material composite particle 1, the porous Si particles may have a predetermined porosity. The porosity of the porous Si particles may be, for example, 1% or greater, 5% or greater, 10% or greater, or 20% or greater, and may be 80% or less, 70% or less, 60% or less, 50% or less, 40% or less, or 30% or less. The porosity of the Si particles can be determined by, for example, observation with a scanning electron microscope (SEM). A large number of samples is preferable, for example, 100 or more. The porosity can be an average value determined from these samples.

1.3 Resin

The active material composite particle 1 comprises a resin. The resin can function as, for example, a binder that binds Si particles together. The type of resin is not particularly limited. The resin may be adopted from various binders known as constituent materials for secondary batteries. The resin may be selected from, for example, butadiene rubber (BR)-based binders, butylene rubber (IIR)-based binders, acrylic-butadiene rubber (ABR)-based binders, styrene-butadiene rubber (SBR)-based binders, polyvinylidene fluoride (PVdF)-based binders, polytetrafluoroethylene (PTFE)-based binders, polyimide (PI)-based binders, carboxymethyl cellulose (CMC)-based binders, polyacrylate-based binders, and polyacrylic acid ester-based binders. Particularly, the PVdF-based binder has a high performance. The PVdF-based binder may be a copolymer comprising units derived from monomers other than VdF. One type of resin may be used alone, or two or more types may be used in combination.

When Si particles are contained in the active material composite particle 1, the mass ratio of the Si particles in the active material composite particle 1 is not particularly limited. For example, the active material composite particle 1 may comprise 70% by mass or greater and 90% by mass or less of Si particles. The mass ratio of the resin in the active material composite particle 1 is not particular limited. For example, the active material composite particle 1 may comprise 10% by mass or greater and 30% by mass or less of the resin. Further, the ratios of Si particles and resin contained in the active material composite particle 1 are not particularly limited as long as the composite particle 1 can be formed. For example, the ratio of resin to the total of Si particles and resin may be 10% by mass or greater, 15% by mass or greater, or 18% by mass or greater, and may be 30% by mass or less, 28% by mass or less, 26% by mass or less, 24% by mass or less, or 22% by mass or less. When the ratio of resin to the total of Si particles and resin is 10% by mass or greater and 30% by mass or less, a larger charging-discharging capacity is easily ensured.

1.4 Additional component

The active material composite particle 1 may consist of only the above Si and resin (and voids), or may comprise additional components other than those. Examples of the additional component include various solid components and liquid components.

1.5 Particle size of active material composite particle

The active material composite particle 1 can be regarded as a secondary particle in which a plurality of Si particles are agglomerated via a resin. The average particle diameter of the composite particles 1 is not particularly limited. The average particle diameter of the composite particles 1 may be 100 nm or more, 1 $\mu$m or more, 2 $\mu$m or more, or 3 $\mu$m or more, and may be 20 $\mu$m or less, 15 $\mu$m or less, or 10 $\mu$m or less. The average particle diameter of the composite particles 1 can be determined by observation with an electron microscope such as SEM, and can be determined as, for example, an average value of maximum Feret diameters of a plurality of composite particles. A large number of samples is preferable, for example, 20 or more, and may be 50 or more or 100 or more. Alternatively, the average particle diameter (D50, median diameter) of the composite particles 1 measured using a laser diffraction particle distribution analyzer may be 100 nm or more, 1 $\mu$m or more, 2 $\mu$m or more, or 3 $\mu$m or more, and may be 20 $\mu$m or less, 15 $\mu$m or less, or 10 $\mu$m or less.

1.6 Structure and shape of active material composite particle

As described above, the active material composite particle 1 may comprise the surface layer portion 1x comprising the resin and the center portion 1y comprising a plurality of the Si particles and voids. The active material composite particle 1, for example, may have a long diameter and a short diameter in a state prior to being used in a secondary battery. The ratio of long diameter to short diameter (long diameter/short diameter) may be, for example, 1.0 or greater or 1.1 or greater, and may be 1.3 or less or 1.2 or less. As described below, when the active material composite particle 1 is used in a negative electrode active material layer of a secondary battery, the negative electrode active material layer can be formed by pressing a negative electrode active material mixture comprising the active material composite particles 1. At this time, the composite particles 1 can be crushed in the pressing direction and have a predetermined aspect ratio or higher. By pressing the composite particles 1 to obtain a predetermined aspect ratio or higher, contact resistance between composite particles and contact resistance between the composite particles and other materials are easily decreased. Specifically, from the viewpoint of further decreasing resistance in the negative electrode described below, when a cross-section of the negative electrode active material layer is observed, half or more (50% or greater in number ratio) of the plurality of composite particles 1 extracted by the following extraction method may have an aspect ratio of 1.5 or higher.

Extraction method: A cross-section of the active material layer is observed; composite particles contained in the cross-section are extracted in descending order of cross-sectional area; and the extraction is ended when the total area of the extracted composite particles exceeds 80% of the total area of all composite particles contained in the cross-section.

The above extraction method may be carried out by image analysis based on a cross-sectional image of the active material layer acquired by SEM. In the image analysis, the aspect ratio of each composite particle may be specified after an elliptical approximation of the composite particles included in the image.

2. Secondary battery

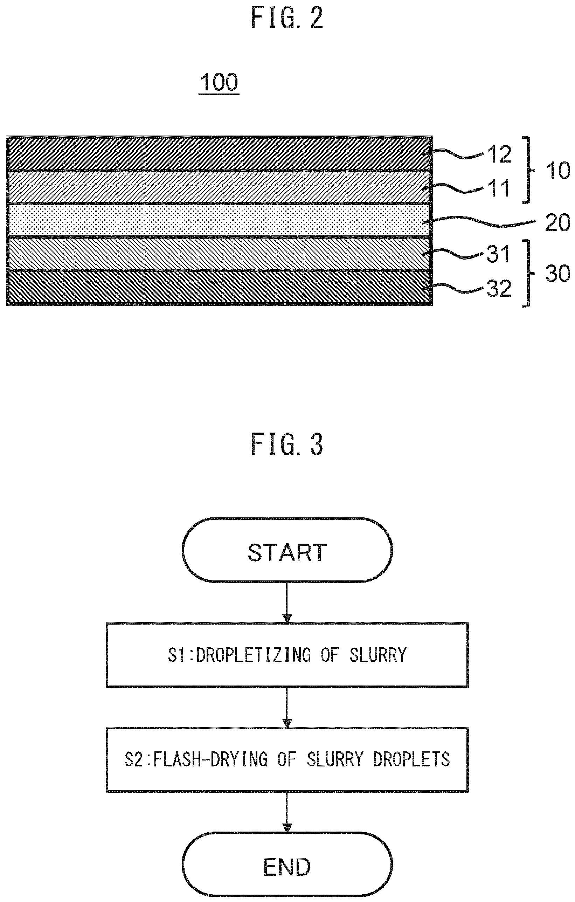

FIG. 2 schematically shows a configuration of a secondary battery 100 according to one embodiment. As shown in FIG. 2, the secondary battery 100 comprises a positive electrode 10, an electrolyte layer 20, and a negative electrode 30. The negative electrode 30 comprises the above active material composite particle 1. In the secondary battery 100, at least one of the positive electrode 10, the electrolyte layer 20, and the negative electrode 30 may comprise a solid electrolyte. In the secondary battery 100, the positive electrode 10, the electrolyte layer 20, and the negative electrode 30 may all comprise a solid electrolyte. Further, the secondary battery 100 may be a solid-state battery. A solid-state battery refers to a battery in which an electrolyte having carrier ion conductivity is mainly composed of a solid electrolyte. However, a liquid component at an additive level may be contained. Alternatively, the secondary battery 100 may be an all-solid-state battery substantially free of a liquid component.

2.1 Positive electrode

The configuration of the positive electrode 10 is not particularly limited as long as the positive electrode can appropriately function as a positive electrode for secondary batteries. As shown in FIG. 2, the positive electrode 10 may comprise a positive electrode active material layer 11 and a positive electrode current collector 12.

2.1.1 Positive electrode active material layer

The positive electrode active material layer 11 comprises at least a positive electrode active material, and may further optionally comprise an electrolyte, a conductive aid, and a binder. The positive electrode active material layer 11 may additionally comprise various additives. The content of each component in the positive electrode active material layer 11 may be appropriately determined according to the target performance. For example, when the entire positive electrode active material layer 11 (total solid content) is set to 100% by mass, the content of the positive electrode active material may be 40% by mass or greater, 50% by mass or greater, 60% by mass or greater, or 70% by mass or greater, and may be 100% by mass or less or 90% by mass or less. The shape of the positive electrode active material layer 11 is not particularly limited, and may be, for example, a sheet-like positive electrode active material layer having a substantially flat surface. The thickness of the positive electrode active material layer 11 is not particularly limited, and may be, for example, 0.1 $\mu$m or more, 1 $\mu$m or more, or 10 $\mu$m or more, and may be 2 mm or less, 1 mm or less, or 500 $\mu$m or less.
Any known positive electrode active material for secondary batteries may be used as the positive electrode active material. Of the known active materials, a material having a relatively higher potential (charge-discharge potential) at which a predetermined carrier ion (for example, lithium ion) is stored and released can be used as the positive electrode active material. The positive electrode active material may be, for example, at least one selected from various lithium-containing compounds, elemental sulfur, and sulfur compounds. The lithium-containing compound as the positive electrode active material may be any of various lithium-containing oxides such as lithium cobaltate, lithium nickel oxide, $Li_{1\pm\alpha}Ni_{1/3}Co_{1/3}Mn_{1/3}O_{2\pm\delta}$, lithium manganate, spinel-based lithium compounds (such as heterogeneous element-substituted Li-Mn spinel having a composition represented by $Li_{1+x}Mn_{2-x-y}M_yO_4$, wherein M is one or more selected from Al, Mg, Co, Fe, Ni, and Zn), lithium titanate, and lithium metal phosphate (such as $LiMPO_4$, wherein M is one or more selected from Fe, Mn, Co, and Ni). Particularly, when the positive electrode active material comprises a lithium-containing oxide comprising at least Li; at least one of Ni, Co, and Mn; and O as constituent elements, a greater effect can be expected. One type of positive electrode active material may be used alone, or two or more types may be used in combination.
Any general shape for a positive electrode active material for batteries may be used as the shape of the positive electrode active material. The positive electrode active material may be, for example, particulate. The positive electrode active material may be solid or hollow, may have voids, or may be porous. The positive electrode active material may be primary particles, or may be secondary particles of a plurality of agglomerated primary particles. The average particle diameter D50 of the positive electrode active material may be, for example, 1 nm or more, 5 nm or more, or 10 nm or more, and may be 500 $\mu$m or less, 100 $\mu$m or less, 50 $\mu$m or less, or 30 $\mu$m or less. The average particle diameter D50 as described herein is a particle diameter (median diameter) at an integrated value of 50% in a volume-based particle size distribution determined by a laser diffraction or scattering method.
A protective layer containing an ion-conducting oxide may be formed on the surface of the positive electrode active material. As a result, a reaction between the positive electrode active material and a sulfide (for example, a sulfide solid electrolyte described below) can be easily suppressed. Examples of the ion-conducting oxide include $Li_3BO_3$, $LiBO_2$, $Li_2CO_3$, $LiAlO_2$, $Li_4SiO_4$, $Li_2SiO_3$, $Li_3PO_4$, $Li_2SO_4$, $Li_2TiO_3$, $Li_4Ti_5O_{12}$, $Li_2Ti_2O_5$, $Li_2ZrO_3$, $LiNbO_3$, $Li_2MoO_4$, and $Li_2WO_4$. The ion-conducting oxide may be partially substituted with a doping element such as P or B. The coverage (area ratio) of the protective layer on the surface of the positive electrode active material may be, for example, 70% or greater, 80% or greater, or 90% or greater. The thickness of the protective layer may be, for example, 0.1 nm or more or 1 nm or more, and may be 100 nm or less or 20 nm or less.
The electrolyte that can be contained in the positive electrode active material layer 11 may be a solid electrolyte, a liquid electrolyte (electrolytic solution), or a combination thereof. Particularly, when the positive electrode active material layer 11 comprises at least a solid electrolyte as the electrolyte, a greater effect is easily obtained.

Any solid electrolyte known as a solid electrolyte for secondary batteries may be used. The solid electrolyte may be an inorganic solid electrolyte or an organic polymer electrolyte. Particularly, the inorganic solid electrolyte has excellent ion-conducting properties and heat resistance. Examples of the inorganic solid electrolyte can include oxide solid electrolytes such as lithium lanthanum zirconate, LiPON, $Li_{1+X}Al_XGe_{2-X}(PO_4)_3$, Li-SiO-based glass, and Li-Al-S-O-based glass; and sulfide solid electrolytes such as $Li_2S-P_2S_5$, $Li_2S-SiS_2$, $LiI-Li_2S-SiS_2$, $LiI-Si_2S-P_2S_5$, $Li_2S-P_2S_5-LiI-LiBr$, $LiI-Li_2S-P_2S_5$, $LiI-Li_2S-P_2O_5$, $LiI-Li_3PO_4-P_2S_5$, and $Li_2S-P_2S_5-GeS_2$. Particularly, among sulfide solid electrolytes, sulfide solid electrolytes comprising at least Li, S, and P as constituent elements have a high performance. The solid electrolyte may be amorphous or crystalline. The solid electrolyte may be, for example, particulate. One type of solid electrolyte may be used alone, or two or more types may be used in combination.

The electrolytic solution may comprise a predetermined carrier ion (for example, lithium ion). The electrolytic solution may be, for example, a nonaqueous electrolytic solution. The composition of the electrolytic solution may be the same as one known as a composition of an electrolytic solution for secondary batteries. For example, an electrolytic solution in which a predetermined concentration of a lithium salt dissolved in a carbonate-based solvent can be used. Examples of the carbonate-based solvent include fluoroethylene carbonate (FEC), ethylene carbonate (EC), and dimethyl carbonate (DMC). Examples of the lithium salt include $LiPF_6$.

Examples of the conductive aid that can be contained in the positive electrode active material layer 11 include carbon materials such as vapor-grown carbon fiber (VGCF), acetylene black (AB), Ketjen black (KB), carbon nanotube (CNT), and carbon nanofiber (CNF); and metal materials such as nickel, aluminum, and stainless steel. The conductive aid may be, for example, particulate or fibrous, and the size thereof is not particularly limited. One type of conductive aid may be used alone, or two or more types may be used in combination.

Examples of the binder that can be contained in the positive electrode active material layer 11 include butadiene rubber (BR)-based binders, butylene rubber (IIR)-based binders, acrylate-butadiene rubber (ABR)-based binders, styrene-butadiene (SBR)-based binders, polyvinylidene fluoride (PVdF)-based binders, polytetrafluoroethylene (PTFE)-based binders, and polyimide (PI)-based binders. One type of binder may be used alone, or two or more types may be used in combination.

2.1.2 Positive electrode current collector

As shown in FIG. 2, the positive electrode 10 may comprise a positive electrode current collector 12 in contact with the above positive electrode active material layer 11. Any general positive electrode current collector for batteries can be adopted as the positive electrode current collector 12. The positive electrode current collector 12 may be a foil, a plate, a mesh, a punched metal, or a foam. The positive electrode current collector 12 may be composed of a metal foil or a metal mesh. Particularly, a metal foil has excellent handleability. The positive electrode current collector 12 may be formed of a plurality of foils. Examples of the metal constituting the positive electrode current collector 12 include Cu, Ni, Cr, Au, Pt, Ag, Al, Fe, Ti, Zn, Co, and stainless steel. Particularly, from the viewpoint of ensuring oxidation resistance, the positive electrode current collector 12 may comprise Al. The positive electrode current collector 12 may have on the surface thereof some coating layer for the purpose of adjusting resistance. The positive electrode current collector 12 may be a metal foil or a substrate plated or vapor-deposited with the above metal. When the positive electrode current collector 12 is composed of a plurality of metal foils, there may be some layer between the plurality of metal foils. The thickness of the positive electrode current collector 12 is not particularly limited, and may be, for example, 0.1 $\mu$m or more or 1 $\mu$m or more, and may be 1 mm or less or 100 $\mu$m or less.

2.2 Electrolyte layer

The electrolyte layer 20 is arranged between the positive electrode 10 and the negative electrode 30 and can function as a separator. The electrolyte layer 20 comprises at least an electrolyte, and may further optionally comprise a binder. The electrolyte layer 20 may further comprise various additives. The content of each component in the electrolyte layer 20 is not particularly limited, and may be appropriately determined according to the target performance. The shape of the electrolyte layer 20 is not particularly limited, and may be, for example, a sheet having a substantially flat surface. The thickness of the electrolyte layer 20 is not particularly limited, and may be, for example, 0.1 $\mu$m or more or 1 $\mu$m or more, and may be 2 mm or less or 1 mm or less.

2.2.1 Electrolyte

The electrolyte contained in the electrolyte layer 20 may be appropriately selected from those exemplified as electrolytes that can be contained in the positive electrode active material layer described above. Particularly, an electrolyte layer 20 comprising a solid electrolyte, especially a sulfide solid electrolyte, and especially a sulfide solid electrolyte comprising at least Li, S, and P as constituent elements, has a high performance. When the electrolyte is a solid electrolyte, the solid electrolyte may be amorphous or crystalline. When the electrolyte is a solid electrolyte, the solid electrolyte may be, for example, particulate. One type of electrolyte may be used alone, or two or more types may be used in combination.

2.2.2 Binder

The binder that can be contained in the electrolyte layer 20 may be, for example, appropriately selected from those exemplified as binders that can be contained in the positive electrode active material layer described above.

2.3 Negative electrode

The negative electrode 30 comprises the above active material composite particle 1, and the configuration thereof is not particularly limited as long as the negative electrode can appropriately function as a negative electrode for secondary batteries. As shown in FIG. 2, the negative electrode 30 may comprise a negative electrode active material layer 31 and a negative electrode current collector 32.

2.3.1 Negative electrode active material layer

The negative electrode active material layer 31 comprises at least the active material composite particle 1, and may further optionally comprise an additional active material, an electrolyte, a conductive aid, and a binder. The negative electrode active material layer 31 may additionally comprise various additives. The content of each component in the negative electrode active material layer 31 may be appropriately determined according to the target performance. For example, when the entire negative electrode active material layer 31 (total solid content) is set to 100% by mass, the content of the active material composite particle 1 may be 40% by mass or greater, 50% by mass or greater, 60% by mass or greater, or 70% by mass or greater, and may be 100% by mass or less or 90% by mass or less. The shape of the negative electrode active material layer 31 is not particularly limited, and may be, for example, a sheet-like negative electrode active material layer having a substantially flat surface. The thickness of the negative electrode active material layer 31 is not particularly limited, and may be, for example, 0.1 $\mu$m or more, 1 $\mu$m or more, or 10 $\mu$m or more, and may be 2 mm or less, 1 mm or less, or 500 $\mu$m or less.

The active material composite particle 1 is as described above. The active material composite particle 1 may be contained in a pressed state in the negative electrode active material layer 31. Specifically, when the active material composite particle 1 is used in the negative electrode active material layer 31 of a secondary battery 100, the negative electrode active material layer 31 can be formed by pressing a negative electrode active material mixture comprising the active material composite particles 1. At this time, the composite particles 1 can be crushed in the pressing direction and have a predetermined aspect ratio or higher. By pressing the composite particles 1 to obtain a predetermined aspect ratio or higher, contact resistance within the composite particle 1, contact resistance between composite particles 1, and contact resistance between the composite particles 1 and other materials are easily decreased. One example of the aspect ratio of the composite particle 1 in this case is as described above.

Any known negative electrode active material for secondary batteries may be used as the negative electrode active material in addition to the active material composite particle 1. Of the known active materials, a material having a relatively lower potential (charge-discharge potential) at which a predetermined carrier ion (for example, lithium ion) is stored and released can be used as the negative electrode active material. One type of the additional negative electrode active material may be used alone, or two or more types may be used in combination. From the viewpoint of further enhancing performance of a secondary battery, the higher the ratio of the active material composite particles 1 in the entire negative electrode active material contained in the negative electrode active material layer 31, the better. For example, when the total of the active material composite particles 1 and the additional negative electrode active material is set to 100% by mass, 50% by mass or greater, 60% by mass or greater, 70% by mass or greater, 80% by mass or greater, 90% by mass or greater, or 95% by mass or greater of the active material composite particles 1 may be contained. The upper limit thereof is 100% by mass.

The electrolyte that can be contained in the negative electrode active material layer 31 may be a solid electrolyte, a liquid electrolyte (electrolytic solution), or a combination thereof. Particularly, when the negative electrode active material layer 31 comprises at least a solid electrolyte as the electrolyte, a greater effect is easily obtained. The negative electrode active material layer 31 may comprise a solid electrolyte, especially a sulfide solid electrolyte, and especially a sulfide solid electrolyte comprising Li, S, and P as constituent elements. Examples of the conductive aid that can be contained in the negative electrode active material layer 31 include the carbon materials described above and the metal materials described above. The binder that can be contained in the negative electrode active material layer 31 may be appropriately selected from, for example, those exemplified as binders that can be contained in the positive electrode active material layer 11 described above.

2.3.2 Negative electrode current collector

As shown in FIG. 2, the negative electrode 30 may comprise a negative electrode current collector 32 in contact with the above negative electrode active material layer 31. Any general negative electrode current collector for cells can be adopted as the negative electrode current collector 32. The negative electrode current collector 32 may be a foil, a plate, a mesh, a punched metal, or a foam. The negative electrode current collector 32 may be a metal foil or a metal mesh, or may be a carbon sheet. Particularly, a metal foil has excellent handleability. The negative electrode current collector 32 may be formed of a plurality of foils or sheets. Examples of the metal constituting the negative electrode current collector 32 include Cu, Ni, Cr, Au, Pt, Ag, Al, Fe, Ti, Zn, Co, and stainless steel. Particularly, from the viewpoints of ensuring reduction resistance and making alloying with lithium difficult, the negative electrode current collector 32 may comprise at least one metal selected from Cu, Ni, and stainless steel. The negative electrode current collector 32 may have on the surface thereof some coating layer for the purpose of adjusting resistance. The negative electrode current collector 32 may be a metal foil or a substrate plated or vapor-deposited with the above metal. When the negative electrode current collector 32 is made of a plurality of metal foils, there may be some layer between the plurality of metal foils. The thickness of the negative electrode current collector 32 is not particularly limited, and may be, for example, 0.1 μm or more or 1 μm or more, and may be 1 mm or less or 100 μm or less.

2.4 Additional features

In the secondary battery 100, each of the above components may be housed inside an outer packaging. Any known outer packaging for batteries can be adopted as the outer packaging. In addition, a plurality of batteries 100 may be optionally electrically connected and optionally stacked to form a battery pack. In this case, the battery pack may be housed inside a known battery case. The secondary battery 100 may comprise obvious components such as the necessary terminals. Examples of the shape of the secondary battery 100 can include a coin, a laminate, a cylinder, and a rectangle.

3. Manufacturing method for secondary battery

The secondary battery 100 can be manufactured by applying a known method. For example, the secondary battery 100 can be manufactured by the following method. However, the manufacturing method for the secondary battery 100 is not limited to the following method, and each layer may be formed by, for example, dry molding.

(1) Active material composite particles and etc. constituting a negative electrode active material layer are dispersed in a solvent to obtain a negative electrode slurry. The solvent used in this case is not particularly limited. Water and various organic solvents can be used. The negative electrode slurry is then applied to a surface of a negative electrode current collector or an electrolyte layer described below using a doctor blade, followed by drying, to form a negative electrode active material layer on the surface of the negative electrode current collector or the electrolyte layer to obtain a negative electrode. The negative electrode active material layer may be compression-molded.

(2) A positive electrode active material and etc. constituting a positive electrode active material layer is dispersed in a solvent to obtain a positive electrode slurry. The solvent used in this case is not particularly limited. Water and various organic solvents can be used. The positive electrode slurry is then applied to a surface of a positive electrode current collector or an electrolyte layer described below using a doctor blade, followed by drying, to form a positive electrode active material layer on the surface of the positive electrode current collector or the electrolyte layer to obtain a positive electrode. The positive electrode active material layer may be compression-molded.

(3) The layers are laminated such that an electrolyte layer is interposed between the negative electrode and the positive electrode, in the order of negative electrode current collector, negative electrode active material layer, electrolyte layer, positive electrode active material layer, and positive electrode current collector, to obtain a laminated body. The electrolyte layer, for example may be obtained by molding an electrolytic mixture comprising an electrolyte and a binder, or may be obtained by compression molding. The laminated body may be further compression-molded. Additional members such as terminals are attached to the laminated body as needed. When an electrolytic solution is used, a separator may be adopted in the electrolyte layer.

(4) The laminated body is housed in a battery case and sealed to obtain a secondary battery.

4. Manufacturing method for active material composite particle

The above active material composite particle of the present disclosure can be manufactured, for example, according to the flow as shown in FIG. 3. Specifically, as shown in FIG. 3, the manufacturing method for the active material composite particle of the present disclosure comprises: dropletizing a slurry comprising Si particles, a resin, and a solvent to obtain slurry droplets (step S1); and flash-drying the slurry droplets in a heating gas to obtain an active material composite comprising Si particles and a resin (step S2). In the manufacturing method of the present disclosure, as described below, the dropletizing of the slurry and the flash-drying of the slurry droplets may be carried out by spray drying.

4.1 Step S1

In step S1, a slurry comprising Si particles, a resin, and a solvent is dropletized to obtain slurry droplets. The Si particles and the resin are as described above. The solvent may be any solvent that can disperse the Si particles and dissolve the resin. For example, various organic solvents such as dimethyl carbonate can be adopted.

The "slurry" in the step S1 refers to a suspension body or liquid comprising Si particles, a resin, and a solvent as long as the suspension body or liquid has a fluidity sufficient for dropletizing. In the step S1, the slurry may have a fluidity sufficient for dropletizing using, for example, a spray nozzle or a rotary atomizer. The slurry may comprise some solid or liquid component, in addition to the above Si particles, resin, and solvent.

The "dropletizing" of a slurry in the step S1 means turning a slurry comprising Si particles, a resin, and a solvent into drops comprising Si particles, a resin, and a solvent. In the step S1, the method for dropletizing a slurry comprising Si particles, a resin, and a solvent is not particularly limited. Examples thereof include a method of dropletizing by spraying the slurry. When spraying the slurry, a spray nozzle may be used. Examples of the method of spraying the slurry using a spray nozzle include, but are not limited to, a pressurized spraying method and a two-fluid nozzle method.

When spraying the slurry using a spray nozzle, the nozzle diameter is not particularly limited. The nozzle diameter may be, for example, 0.1 mm or more or 1 mm or more, and may be 10 mm or less or 1 mm or less. The spray rate (supply rate of slurry to spray nozzle) of the slurry is also not particularly limited. The spray rate may be adjusted according to the viscosity and the solid content concentration of the slurry and the nozzle dimensions.

In addition to a method of spraying the slurry using a spray nozzle as described above, examples of the method for dropletizing the slurry also include a method of supplying the slurry comprising Si particles, a resin, and a solvent onto a rotating disk at a constant rate to dropletize the slurry by centrifugal force. In this case, the supply rate of the slurry may be adjusted according to the viscosity and the solid content concentration of the slurry. Alternatively, a method of applying a high voltage to the surface of the slurry comprising Si particles, a resin, and a solvent to dropletize the slurry can be adopted.

In the manufacturing method of the present disclosure, the dropletizing of the slurry (step S 1) and the flash-drying (step S2) described below may be carried out by, for example, by a spray dryer. The method of the spray dryer is not particularly limited, and examples thereof include a method using the above spray nozzle and a method using a rotating disk.

The "slurry droplets" are drops of the slurry comprising Si particles, a resin, and a solvent. The size of the slurry droplets is not particularly limited. The diameter (equivalent circular diameter) of the slurry droplets may be, for example, 0.5 $\mu$m or more or 5 $\mu$m or more, and may be 5000 $\mu$m or less or 1000 $\mu$m or less. The diameter of the slurry droplets can be measured using, for example, a two-dimensional image obtained by imaging the slurry droplets, or can be measured using a laser diffraction particle size analyzer. Alternatively, the droplet size can be estimated from the operating conditions of the apparatus forming the slurry droplets.

4.2 Step S2

In step S2, the slurry droplets are subjected to flash-drying in a heating gas to obtain an active material composite comprising Si particles and a resin.

The "flash-drying" in the manufacturing method of the present disclosure means that the slurry droplets are dried while being floated in a high-temperature gas flow. The "flash-drying" can include not only drying but also ancillary operations using dynamic gas flow. By continuously applying hot gas by flash-drying, a force is continuously applied to the slurry droplets. Using this force, for example, the step S2 may comprise deagglomerating (crushing) the slurry droplets or granules by flash-drying. In other words, in the method of the present disclosure, even when granulation of the slurry droplets occurs, the granules can be crushed by the flash-drying. Thus, a slurry having a low solid content concentration can be used, and treatment rate is easily increased. In the step S2, the above drying and crushing may be carried out simultaneously, or may be carried out separately. In the step S2, a first flash-drying in which predominantly the slurry droplets are dried and a second flash-drying in which predominantly the granules are crushed may be carried out. In addition, the step S2 may be repeated.

In the step S2, the temperature of the heating gas may be any temperature as long as the solvent can be volatilized from the slurry droplets. The temperature may be, for example, 100 °C or higher, 110 °C or higher, 120 °C or higher, or 130 °C or higher, and may be 180 °C or lower, 170 °C or lower, 160 °C or lower, or 150 °C or lower.

In the step S2, the gas supply amount (flow rate) of the heating gas can be appropriately set in consideration of the size of the apparatus used and the supply amount of the slurry droplets. For example, the flow rate of the heating gas may be 0.10 m³/min or more, 0.15 m³/min or more, 0.20 m³/min or more, 0.25 m³/min or more, 0.30 m³/min or more, 0.35 m³/min or more, 0.40 m³/min or more, 0.45 m³/min or more, or 0.50 m³/min or more, and may be 5.00 m³/min or less, 4.00 m³/min or less, 3.00 m³/min or less, 2.00 m³/min or less, or 1.00 m³/min or less.

In the step S2, the gas supply speed (flow velocity) of the heating gas can also be appropriately set in consideration of the size of the apparatus used and the supply amount of the slurry droplets. For example, the flow velocity of the heating gas in at least a portion of the system may be 1 m/s or more or 5 m/s or more, and may be 50 m/s or less or 10 m/s or less.

In the step S2, the treatment time (drying time) by flash-drying can also be appropriately set in consideration of the size of the apparatus used and the supply amount of the slurry droplets. For example, the treatment time may be 5 s or less or 1 s or less.

In the step S2, a heating gas that is substantially inert to the Si particles, the resin, and the solvent may be used. For example, an oxygen-containing gas such as air, an inert gas such as nitrogen or argon, or dry air having a low dew point can be used. The dew point in that case may be -10 °C or lower or -50 °C or lower, or may be -70 °C or lower.

As the apparatus for flash-drying, for example, a spray dryer can be used, but the apparatus is not limited thereto.

According to the above manufacturing method, for example, slurry droplets comprising a plurality of Si particles, a resin, and a solvent are subjected to flash-drying, the resin can be concentrated on the surface layer of the composite particle as the solvent volatilizes, and voids can be formed in the center portion of the composite particle while a plurality of Si particles can be arranged in the center portion of the composite particle. As a result, the active material composite particle 1 of the present disclosure is obtained. Specifically, when a cross-section of the composite particle 1 is observed, the area ratio of the resin in the surface portion 1x of the composite particle 1 is higher than the area ratio of the resin in the center portion 1y of the composite particle 1. Further, when a cross-section of the composite particle 1 is observed, the porosity in the center portion 1y of the composite particle 1 is likely higher than the porosity in the surface layer portion 1x of the composite particle 1, and the area ratio of Si in the center portion 1y of the composite particle 1 is likely higher than the area ratio of Si in the surface layer portion 1x of the composite particle 1.

5. Method of charging and discharging secondary battery and method of improving cycle characteristics of secondary battery

When the active material composite particle of the present disclosure is contained in a negative electrode of a secondary battery, the cycle characteristics of the secondary battery is easily improved. Specifically, the method of charging and discharging a secondary battery and the method of improving cycle characteristics of a secondary battery in the present disclosure are characterized by: the methods comprising repeated charging and discharging of a secondary battery; the secondary battery comprising a positive electrode, an electrolyte, and a negative electrode; and the negative electrode comprising the active material composite particle of the present disclosure.

6. Vehicle having secondary battery

As described above, when the active material composite particle of the present disclosure is contained in a negative electrode of a secondary battery, an improvement in cycle characteristics of the secondary battery can be expected. A secondary battery having such excellent charging-discharging cycle characteristics can be suitably used in, for example, at least one type of vehicles selected from hybrid electric vehicle (HEV), plug-in hybrid electric vehicle (PHEV), and battery electric vehicle (BEV). Specifically, the technique of the present disclosure also includes an aspect of a vehicle having a secondary battery, wherein the secondary battery comprises a positive electrode, an electrolyte, and a negative electrode, and the negative electrode comprises the active material composite particle of the present disclosure.

EXAMPLES

Hereinafter, the technique of the present disclosure will be further described in detail with reference to the Examples. However, the technique of the present disclosure is not limited to the following Examples.

1. Production of negative electrode active material

1.1 Comparative Example: Production of nanoporous Si particle

0.65 g of Si particles (particle diameter of 0.5 μm, manufactured by Japan Pure Chemical Co., Ltd.) and 0.60 g of metallic Li (manufactured by Honjo Metal Co., Ltd.) were mixed using an agate mortar under an Ar atmosphere to obtain a LiSi precursor. In a glass reactor under an Ar atmosphere, 1.0 g of the LiSi precursor and 125 ml of a dispersion medium (1,3,5-trimethylbenzene, manufactured by Nacalai Tesque, Inc.) were mixed using an ultrasonic homogenizer (UH-50, manufactured by SMT Co., Ltd.). The LiSi precursor dispersion liquid obtained after mixing was cooled to 0 °C, 125 ml of ethanol (manufactured by Nacalai Tesque, Inc.) was added dropwise thereto, and a reaction was allowed for 120 min. After the reaction, 50 ml of acetic acid (manufactured by Nacalai Tesque, Inc.) was further added dropwise thereto, and a reaction was allowed for 60 min. After the reaction, a liquid and a solid reactant (negative electrode active material) were separated by suction filtration. The obtained solid reactant was vacuum-dried at 120 °C for 2 h to recover nanoporous Si particles,

1.2 Example: Production of active material composite particle

Si particles (particle diameter of 0.1 $\mu$m, manufactured by Japan Pure Chemical Co., Ltd.) and a PVdF-HFP binder (manufactured by Kureha Corporation) were dispersed and dissolved in dimethyl carbonate (manufactured by Nacalai Tesque, Inc.) at a mass ratio of Si particles to binder = 100:26.7 and then to obtain a slurry. This slurry was sprayed into a spray dryer in a nitrogen gas atmosphere at a temperature of 140 °C and thus flash-dried while being dropletized. After flash-drying, active material composite particles comprising the Si particles and the PVdF-HFP binder as the resin were recovered.

2. Production of solid electrolyte

0.550 g of $Li_2S$ (manufactured by Furuchi Chemical Corporation), 0.887 g of $P_2S_5$ (manufactured by Sigma-Aldrich), 0.285 g of LiI (manufactured by Nippoh Chemicals Co., Ltd.), and 0.277 g of LiBr (manufactured by Japan Pure Chemical Co., Ltd.) were mixed in an agate mortar for 5 min. 4 g of n-heptane (dehydrated grade, manufactured by Kanto Chemical Co., Inc.) was added to the resulting mixture, and mechanical milling was carried out for 40 h using a planetary ball mill to obtain a sulfide solid electrolyte.

3. Production of positive electrode mixture

$LiNi_{1/3}Co_{1/3}Mn_{1/3}O_2$ (manufactured by Nichia Corporation) was subjected to a surface treatment using $LiNbO_3$ to obtain a positive electrode active material. 1.5 g of the positive electrode active material, 0.023 g of a conductive aid (VGCF, manufactured by Showa Denko K.K.), 0.239 g of the above sulfide solid electrolyte, 0.011 g of a binder (PVdF, manufactured by Kureha Corporation), and 0.8 g of butyl butyrate (manufactured by Kishida Chemical Co., Ltd.) were mixed using an ultrasonic homogenizer (UH-50, manufactured by SMT Co., Ltd.) to obtain a positive electrode mixture.

4. Production of negative electrode mixture

1.0 g of the negative electrode active material according to the above Comparative Example or Example, 0.04 g of a conductive aid (VGCF, manufactured by Showa Denko K.K.), 0.776 g of the above sulfide solid electrolyte, 0.02 g of a binder (PVdF, manufactured by Kureha Corporation), and 1.7 g of butyl butyrate (manufactured by Kishida Chemical Co., Ltd.) were mixed using an ultrasonic homogenizer (UH-50, manufactured by SMT Co., Ltd.) to obtain a negative electrode mixture.

5. Production of evaluation battery

0.065 g of the above sulfide solid electrolyte was charged into a 1 $cm^2$ ceramic mold and pressed at 1 ton/$cm^2$ to produce a solid electrolyte layer. 0.018 g of the above positive electrode mixture was applied to one side of the electrolyte layer and pressed at 1 ton/$cm^2$ to produce a positive electrode active material layer. 0.0054 g of the above negative electrode mixture was applied on the side opposite to the positive electrode active material layer and pressed at 4 ton/cmto produce a negative electrode active material layer. Al foil was used for the positive electrode current collector, and Cu foil was used for the negative electrode current collector. An evaluation battery (all-solid-state battery) was produced thereby.

6. Evaluation

6.1 Cross-sectional observation and image processing of active material composite particle

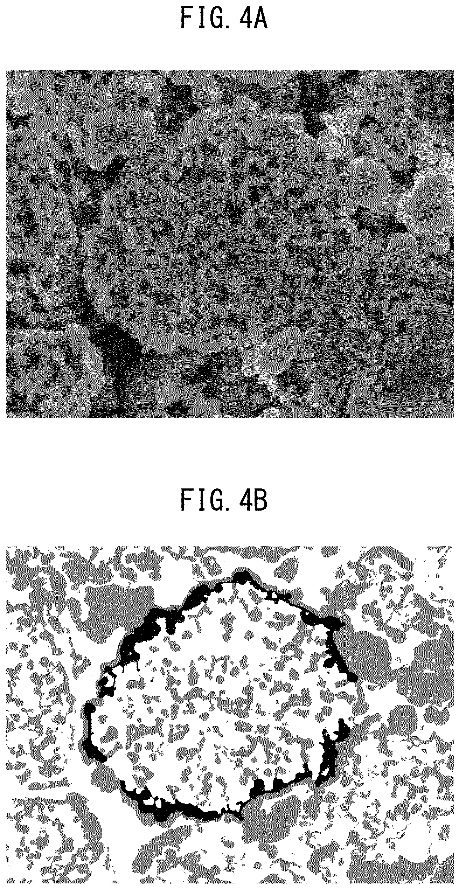

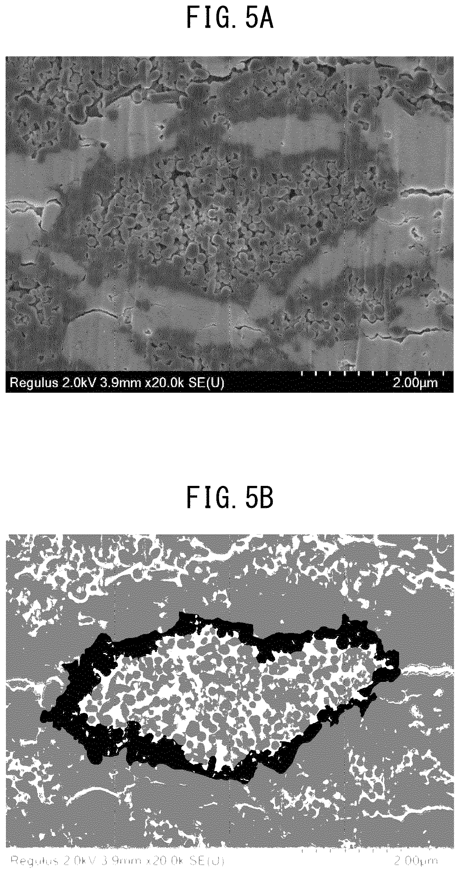

For the active material composite particle according to the Example, the cross-sectional structure before pressing and the cross-sectional structure after pressing were observed with SEM, the elements contained in the cross-section of the composite particle were analyzed with EDX, and the cross-sectional structure of the composite particle was identified by image processing. FIG. 4A is a cross-sectional SEM image of the composite particle before pressing. FIG. 4B is the image-processed result of FIG. 4A. FIG. 5A is a cross-sectional SEM image of the composite particle after pressing. FIG. 5B is the image-processed result of FIG. 5A.

As shown in FIGS. 4A and 4B, the active material composite particle according to the Example comprises a plurality of nanoporous Si particles and a binder. When a cross-section thereof was observed, a large amount of the binder was present in the surface layer portion of the composite particle (black portion in FIG. 4B). On the other hand, it was found that almost no binder was present in the center portion of the composite particle, and a plurality of nanoporous Si particles and voids were present (gray and white portions in FIG. 4B). Specifically, for the active material composite particle according to the Example, when a cross-section of the composite particle was observed, (I) the area ratio of the resin in the surface layer portion of the composite particle was higher than the area ratio of the resin in the center portion of the composite particle. In addition, (II) the porosity in the center portion of the composite particle was higher than the porosity in the surface layer portion of the composite particle, and (III) the area ratio of Si in the center portion of the composite particle was higher than the area ratio of Si in the surface layer portion of the composite particle.

A flat-shaped active material composite particle is present in the center portion of the images in FIGS. 5A and B. As shown in FIGS. 5A and B, the active material composite particle according to the Example was crushed in the pressing direction by the press, and the aspect ratio was increased. As is clear from FIG. 5B, the flat-shaped active material composite particle was found to have an outermost layer (black portion) composed of the binder and further have voids (white portions) and, together therewith, a plurality of Si particles (gray portions) on the inside (center portion) of the outermost layer. Specifically, from FIGS. 5A and B, it was found that the active material composite particle according to the Example maintained the above structures (I) to (III) even after pressing.

As shown in FIGS. 4A and B and FIGS. 5A and B, a binder layer as the outermost layer and a portion comprising a plurality of nanoporous Si particles and voids, which is the center portion on the inside of the binder layer, are clearly separated in the active material composite particle according to the Example. For the 14 composite particles after pressing and the 7 composite particles before pressing, the outermost layer area ratio in the entire cross-section of the composite particle ([area of outermost layer]/[area of entire cross-section of composite particle]), the Si area ratio contained in the center portion in the entire cross-section of the composite particle ([area of Si in center portion]/[area of entire cross-section of composite particle]), and the void area ratio contained in the center portion in the entire cross-section of the composite particle ([area of voids in center portion]/[area of entire cross-section of composite particle]) were identified based on cross-sectional SEM images. The results are shown in the following Table 1.

[Table 1]

| Composite particle | | Outermost layer area ratio | Center portion | | Total |
| --- | --- | --- | --- | --- | --- |
| | | | Si area ratio | Void area ratio | |
| After pressing | 1 | 0.80 | 0.10 | 0.10 | 1.00 |
| | 2 | 0.59 | 0.24 | 0.17 | 1.00 |
| | 3 | 0.72 | 0.14 | 0.14 | 1.00 |
| | 4 | 0.56 | 0.21 | 0.23 | 1.00 |
| | 5 | 0.63 | 0.18 | 0.19 | 1.00 |
| | 6 | 0.75 | 0.11 | 0.14 | 1.00 |
| | 7 | 0.43 | 0.31 | 0.26 | 1.00 |
| | 8 | 0.62 | 0.21 | 0.17 | 1.00 |
| | 9 | 0.57 | 0.23 | 0.20 | 1.00 |
| | 10 | 0.68 | 0.12 | 0.20 | 1.00 |
| | 11 | 0.57 | 0.24 | 0.19 | 1.00 |
| | 12 | 0.50 | 0.27 | 0.23 | 1.00 |
| | 13 | 0.36 | 0.37 | 0.27 | 1.00 |
| | 14 | 0.81 | 0.07 | 0.12 | 1.00 |

(continued)

| Composite particle | | Outermost layer area ratio | Center portion | | Total |
| --- | --- | --- | --- | --- | --- |
| | | | Si area ratio | Void area ratio | |
| Before pressing | 15 | 0.11 | 0.37 | 0.52 | 1.00 |
| | 16 | 0.18 | 0.28 | 0.54 | 1.00 |
| | 17 | 0.21 | 0.26 | 0.53 | 1.00 |
| | 18 | 0.12 | 0.30 | 0.58 | 1.00 |
| | 19 | 0.15 | 0.26 | 0.59 | 1.00 |
| | 20 | 0.13 | 0.28 | 0.59 | 1.00 |
| | 21 | 0.19 | 0.22 | 0.59 | 1.00 |

From the results shown in Table 1, it was found that although the area ratios changed significantly before and after pressing, the active material composite particle according to the Example maintained the above structures (I) to (III) before and after pressing.

6.2 Endurance testing of evaluation battery

An evaluation battery in a low constraint state (constraint pressure: 0.2 MPa) or a high constraint state (constraint pressure: 5.0 MPa) was CC/CV-charged to 4.35 V at 0.3 mA and then CC/CV-discharged to 2.5 V at 0.3 mA. This was repeated five times. The following DC-IR measurement was carried out to determine the initial resistance value.
DC-IR measurement: After adjusting the voltage to 3.7 V, the resistance value was determined from the voltage drop when a current of 10 mA was applied for 5 s.
The above evaluation battery was further CC-charged to 4.1 V at 1.4 mA and then CC-discharged to 3.1 V at 1.4 mA as one cycle, which was repeated for 500 cycles. Thereafter, DC-IR measurement was carried out in the same manner as in the initial case, and the resistance value after 500 cycles was determined. The resistance increase rate was determined by the following formula.

$$[\text{Resistance increase rate}] = ([\text{resistance value after 500 cycles}]/[\text{initial resistance value}] - 1) \times 100$$

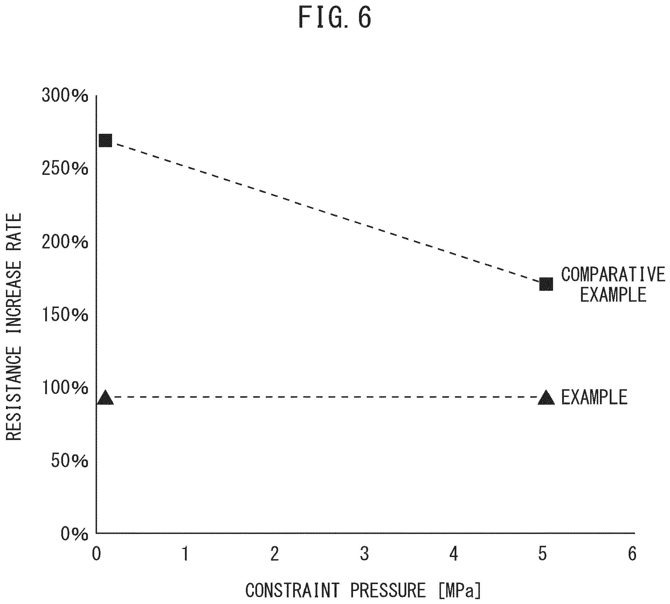

Results are shown in FIG. 6. As shown in FIG. 6, the battery according to the Comparative Example had a high resistance increase rate under a low constraint pressure and a high constraint pressure. Particularly, the resistance increase rate was high under a low constraint pressure. In contrast, the battery according to the Example was able to maintain the low resistance increase rate under both a low constraint pressure and a high constraint pressure. This is presumed to be due to the following mechanism.
The active material composite particle according to the Example has a higher area ratio of resin in the surface layer portion than in the center portion, as described above. Presumably, since the ratio of resin in the surface layer portion of the composite particle is high, even when Si expands due to charging, the volume change of the composite particle as a whole is moderated by the resin, and the shape of the composite particle as a whole is maintained. In addition, since the ratio of resin in the surface layer portion is high, even when Si expands due to charging, the resin in the surface layer portion functions as a cushioning material, and cracks and gaps in the battery material surrounding the composite particle are presumably less likely to occur. As a result, excellent cycle characteristics are presumably demonstrated under both a high constraint pressure and low constraint.
Alternatively, the active material composite particle according to the Example has a higher porosity in the center portion than in the surface layer portion, as described above. Presumably, since the porosity in the center portion is higher than the porosity in the surface layer portion, even when Si expands due to charging, the expanded Si portion can be absorbed by voids, the volume change of the composite particle as a whole is moderated, and the shape of the composite particle as a whole is maintained. In addition, since the volume change of the composite particle as a whole is moderated, cracks and gaps in the battery material surrounding the composite particle are presumably less likely to occur. As a result, excellent cycle characteristics are presumably demonstrated under both a high constraint pressure and low constraint.

Alternatively, the active material composite particle according to the Example has a higher area ratio of Si in the center portion than in the surface layer portion. Presumably, since the area ratio of Si in the center portion is higher than the area ratio of Si in the surface layer portion, even when Si expands due to charging, expansion of the Si does not easily reach the outer portion of the composite particle, the volume change of the composite particle as a whole is moderated, and the shape of the composite particle as a whole is maintained. In addition, since the volume change of the composite particle as a whole is moderated, cracks and gaps in the battery material surrounding the composite particle are presumably less likely to occur. As a result, excellent cycle characteristics are presumably demonstrated under both a high constraint pressure and low constraint.

The above Example exemplifies the case in which nanoporous Si particles were used as the Si constituting the active material composite particle and a PVdF-based binder was used as the resin constituting the active material composite particle. However, the technique of the present disclosure is not limited to this aspect.

As described above, an active material composite particle comprising Si and a resin, wherein the area ratio of the resin in the surface layer portion of the composite particle is higher than the area ratio of the resin in the center portion of the composite particle when a cross-section of the composite particle is observed, has excellent cycle characteristics under low constraint.

REFERENCE SIGNS LIST

|  |  |
|--|--|
| 1 | active material composite particle |
| 2 | resin layer |
| 3 | void |
| 4 | Si particle |
| 10 | positive electrode |
|  | 11 positive electrode active material layer |
|  | 12 positive electrode current collector |
| 20 | electrolyte layer |
| 30 | negative electrode |
|  | 31 negative electrode active material layer |
|  | 32 negative electrode current collector |
| 100 | secondary battery |

**Claims**

1. An active material composite particle, comprising Si and a resin, wherein
   an area ratio of the resin in a surface layer portion of the composite particle is higher than an area ratio of the resin in a center portion of the composite particle when a cross-section of the composite particle is observed.

2. The active material composite particle according to claim 1, wherein
   a porosity in the center portion of the composite particle is higher than a porosity in the surface layer portion of the composite particle when a cross-section of the composite particle is observed.

3. The active material composite particle according to claim 1 or 2, wherein
   an area ratio of the Si in the center portion of the composite particle is higher than an area ratio of the Si in the surface layer portion of the composite particle when a cross-section of the composite particle is observed.

4. The active material composite particle according to any one of claims 1 to 3, wherein
   the surface layer portion is composed of the resin.

5. The active material composite particle according to any one of claims 1 to 4, wherein
   the center portion comprises a plurality of Si particles.

6. The active material composite particle according to claim 5, wherein
   the Si particles are porous.

7. The active material composite particle according to claim 5 or 6, wherein

the composite particle comprises the surface layer portion comprising the resin and the center portion comprising a plurality of the Si particles and voids.

8. A secondary battery, comprising a positive electrode, an electrolyte layer, and a negative electrode, wherein the negative electrode comprises the active material composite particle according to any one of claims 1 to 7.

9. The secondary battery according to claim 8, wherein at least one of the positive electrode, the electrolyte layer, and the negative electrode comprises a solid electrolyte.

10. A manufacturing method for an active material composite particle, the method comprising:

droplet izing a slurry comprising Si particles, a resin, and a solvent to obtain slurry droplets; and
flash-drying the slurry droplets in a heating gas to obtain an active material composite particle comprising the Si particles and the resin.

11. The manufacturing method according to claim 10, wherein the droplet izing of the slurry and the flash-drying of the slurry droplets are carried out by spray drying.

# FIG. 1A

<u>1</u>

# FIG. 1B

<u>1</u>

# FIG. 2

<u>100</u>

# FIG. 3

START

S1:DROPLETIZING OF SLURRY

S2:FLASH-DRYING OF SLURRY DROPLETS

END

FIG. 4A

FIG. 4B

## FIG. 5A

Regulus 2.0kV 3.9mm x20.0k SE(U)                    2.00μm

## FIG. 5B

Regulus 2.0kV 3.9mm x20.0k SE(U)                    2.00μm

# FIG. 6

Europäisches
Patentamt

European
Patent Office

Office européen
des brevets

# EUROPEAN SEARCH REPORT

Application Number

EP 23 18 4116

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | Russ John C ET AL: "Computer-Assisted Methods" In: "Practical Stereology Second Edition", 1 January 2000 (2000-01-01), Springer New York, NY, XP093099599, ISBN: 978-0-306-46476-8 pages 183-221, * the whole document * | | INV. H01M4/134 H01M4/1395 H01M4/38 ADD. H01M4/02 |
| T | Russ John T. ET AL: "Chapter 10:: Computer Measurement of Images" In: "Practical Stereology Second Edition", 1 January 2000 (2000-01-01), Springer New York, NY, XP093099617, ISBN: 978-0-306-46476-8 pages 223-270, * the whole document * | | |
| X | US 2019/074506 A1 (TROEGEL DENNIS [DE] ET AL) 7 March 2019 (2019-03-07) * paragraph [0001] - paragraph [0071] * | 1-11 | |
| X | US 2020/006759 A1 (AY SEFER [DE] ET AL) 2 January 2020 (2020-01-02) * paragraph [0128] - paragraph [0129] * * paragraph [0005] - paragraph [0007] * | 1-11 | TECHNICAL FIELDS SEARCHED (IPC) H01M |

The present search report has been drawn up for all claims

| Place of search | Date of completion of the search | Examiner |
|---|---|---|
| Munich | 1 December 2023 | Radeck, Stephanie |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
.................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 23 18 4116

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2023

| Patent document cited in search report | | Publication date | Patent family member(s) | | Publication date |
|---|---|---|---|---|---|
| US 2019074506 | A1 | 07-03-2019 | CN 108780885 | A | 09-11-2018 |
| | | | DE 102016203349 | A1 | 07-09-2017 |
| | | | EP 3424098 | A1 | 09-01-2019 |
| | | | JP 7075346 | B2 | 25-05-2022 |
| | | | JP 2019508854 | A | 28-03-2019 |
| | | | KR 20180118714 | A | 31-10-2018 |
| | | | US 2019074506 | A1 | 07-03-2019 |
| | | | WO 2017148871 | A1 | 08-09-2017 |
| US 2020006759 | A1 | 02-01-2020 | CN 110546789 | A | 06-12-2019 |
| | | | EP 3545572 | A1 | 02-10-2019 |
| | | | JP 2020507547 | A | 12-03-2020 |
| | | | KR 20190117633 | A | 16-10-2019 |
| | | | US 2020006759 | A1 | 02-01-2020 |
| | | | WO 2018145765 | A1 | 16-08-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021022554 A

- JP 2021057216 A